# EUROPEAN PATENT APPLICATION

(11) **EP 2 806 528 A1**
(43) Date of publication of application: **26.11.2014**
(21) Application number: 13169078.6
(22) Date of filing: 24.05.2013
(51) Int. Cl.: H02J 7/02, H02J 5/00

(54) **Method and system for transfer of power and data**

(71) Applicant: Koninklijke Philips N.V., 5656 AE Eindhoven (NL)
(72) Inventor: Linnartz, Johan-Paul Marie Gerard, 5600 AE Eindhoven (NL); Abbo, Anteneh Alemu, 5600 AE Eindhoven (NL); Tao, Haimin, 5600 AE Eindhoven (NL); Hendrix, Machiel Antonius Martinus, 5600 AE Eindhoven (NL); Alarcon-Rivero, Manuel Eduardo, 5600 AE Eindhoven (NL); Duarte, Jorge Luiz, 5600 AE Eindhoven (NL); Fu, Jie, 5600 AE Eindhoven (NL)
(74) Representative: Ketting, Alfred

(57) **Abstract**

The present invention relates to a method (400) for transfer of power and data, in an arrangement comprising a first circuit (102) comprising a first inductor (106) and a second circuit (104) comprising a second inductor (108), wherein the circuits (102, 104) are inductively coupled (110) to each other while being galvanically separated from each other, the method (400) comprising the steps of transferring (402) power between the first circuit (102) and the second circuit (104) by applying an alternating current to the inductor (106) of the first circuit (102) such that a current is built up in the inductor (108) of the second circuit (104), altering (404) a load condition in the second circuit (102) for modulating data to be transferred from the second circuit (102) to the first circuit (104), and detecting a change in current in the first circuit (102) resulting from the altered load condition in the second circuit (104), wherein the detected change in at least one of a current, a voltage or an impedance is demodulated for receiving the data at the first circuit (102).

The present invention also relates to a corresponding system (100) and a lighting arrangement (200) comprising the system (100).

## Description

### FIELD OF THE INVENTION

The present invention generally relates to a method and corresponding system for transfer of power and data between a first circuit and a second circuit, wherein the circuits are galvanically separated from each other. The invention also relates to an illumination arrangement provided with galvanic isolation and adapted for combined transfer of power and data.

### BACKGROUND OF THE INVENTION

A global need and desire for a reduced use of energy and in particular electricity has rapidly advanced the development of more energy efficient light sources. To use light tubes to illuminate for example residential or office buildings is very common throughout the world. Today, fluorescent light tubes driven by HF (high frequency) drivers, feeding the light tubes with the required energy, tend to dominate the market. However, standard fluorescent light tubes still consume a considerable amount of energy, which is why more efficient light sources are preferred when installing new or when upgrading existing lighting systems in buildings etc.

Light emitting diodes, LEDs, are employed in a wide range of lighting applications. As LEDs have the advantage of providing a bright light, being reasonably inexpensive and energy efficient, it is becoming increasingly attractive to use LEDs as an alternative to traditional lighting. Furthermore, LEDs have a long operational lifetime. As an example, a LED lamp may, at present, last 50 000 hours which is up to 50 times the operational life of a fluorescent tube. The use of LED based light sources may significantly reduce the amount of energy required to illuminate, for example, a building. A cost effective way to reduce the energy consumption from existing light tube based systems is to apply retrofit LED based light tubes.

In order to further improve the energy efficiency in LED based lighting systems, such as light tube fittings retrofitted with LED based light tubes, the use of various sensors which, for example, provides information about ambient light or occupancy of the illuminated space may be employed. In order to adapt the lighting based on sensor information, the light sources concerned must be controlled by a controller capable of adapting the intensity of the light sources in question.

In for example the U.S.A recent developments require office lighting systems to be equipped with occupancy and daylight sensors. Further, add-on sensors used in conjunction with retrofit of conventional lighting systems must be galvanically separated from the mains supply in order to fulfill current regulations.

The requirement of galvanic separation brings about certain problems as the sensors need to be powered and at the same time be able to transfer sensor data to the light controller. There are a number of known approaches serving the purpose of power and data transfer between galvanically separated entities, such as sensors and controllers.

A standard solution, often used in conjunction with sensors when galvanic separation is required, is to use an optical coupling for transferring data. This approach has a significant drawback in that the sensor may not be powered over the optical coupling, meaning that for example an additional transformer or winding will have to be used. Therefore the sensor needs to be powered by, for example, an additional winding of a transformer or driver. The use of two galvanic separations, one in the form of the optical coupling and one in the form of the additional winding, brings about additional productions costs as well as adding vulnerability to the system.

Another approach used in order to achieve power and data transfer over a galvanic separation is to use an inductive coupling via resonant coils. According to this approach, power is transferred via coupled resonance between the coils. The transfer of data may then be done using several known techniques. For instance the secondary side may be phase modulated in order to transfer data back to the primary side. Another approach is to transfer data over an RF-link, such as Bluetooth or Zigbee. However, also the use of an RF link requires additional components, such as radio transceivers, bringing about additional costs.

Hence, there is a need for an improved method and system for power and data transfer.

### SUMMARY OF THE INVENTION

According to an aspect of the invention, the above is at least partly alleviated by a method for transfer of power and data, in an arrangement comprising a first circuit comprising a first inductor and a second circuit comprising a second inductor, wherein the circuits are inductively coupled to each other while being galvanically separated from each other, the method comprising the steps of transferring power between the first circuit and the second circuit by applying an alternating current to the inductor of the first circuit such that a current is built up in the inductor of the second circuit, altering a load condition in the second circuit for modulating data to be transferred from the second circuit to the first circuit, and detecting a change in at least one of a current, a voltage or an impedance in the first circuit resulting from the altered load condition in the second circuit, wherein the detected change in at least one of a current, a voltage or an impedance is demodulated for receiving the data at the first circuit.

By means of the invention it is possible to transfer power from a first to another circuit, while at the same time allowing for the transfer of data from the second to the first circuit. According to the invention, the circuits used are inductively coupled but galvanically separated which should be understood as the circuits being influenced by their respective magnetic fields but not having any conductive paths connecting the circuits. The method may be used on any inductively coupled but galvanically separated circuits where the circuits are coupled in the sense of that a changed load condition in the second circuit may be picked up by the first circuit. It should be noted that within the context of this application, the term circuit may be any type of circuitry being able to react on and process alternating currents or voltages when being subjected to an electrical input signal such as an alternating current.

The present invention is based on the realization that by altering a load condition in a predetermined way in the second circuit being inductively coupled to the first (or even further additional circuits), data may be transferred between the second and the first circuit without seriously affecting a transfer of power which may take place simultaneously in a direction from the first to the second circuit. This is according to the invention achieved by using a modulation scheme which maximizes the total time when the inductive coupling is maintained between the circuits in order to minimize any disturbance of the power transfer. The modulation scheme may thus be formulated such that the load condition is altered for only limited periods of time in order to not significantly influence any ongoing power transfer, thereby counteracting any unwanted loss of power.

The circuits typically include an inductor and a capacitor, and the operating frequencies of the circuits are typically tuned quite close to the resonance frequency of the passive components to match each other. In other words, the circuits may be resonant circuits in the sense that they resonate when subjected to a certain resonance frequency. By tuning the operating frequencies of two or several circuits the energy transfer between the different circuits may be enhanced. The first and second circuits may thereby be provided with additional capacitor networks to increase the coupling efficiency. By enhancing the inductive coupling between the circuits it is possible to more efficiently transfer energy between the first and the second circuit. For instance, in order to achieve an efficient and robust inductive coupling between the different circuits, the circuits should preferably be adjacently arranged, as the magnetic fields of the different circuits establishing the inductive coupling between the different circuits decay rapidly with an increased distance.

It should be noted that within the context of this application the term "inductor" may be any type of electrical component or wiring being able to pick up an alternating magnetic field, resulting in a current being built up in the component or wiring, the most common example being a coil. Furthermore, the term "transferring power between circuits" should be interpreted as any interaction between inductively coupled circuits sufficient to transfer energy by means of the inductive coupling itself. For instance, power may be transferred by employing an inductor with an alternating current resulting in an alternating magnetic field, which field in turn may be picked up by another adjacently arranged inductor resulting in a voltage being built up. The voltage being built up may then be used to power for example a sensor or any other type of similar electrical component. Still further, the term "altering a load condition" should be interpreted as any change to any circuit used resulting in a change being detectable in another circuit being inductively coupled to the circuit in which the load condition is changed.

The wording "data" may mean any information, in fact any digital or analog form of representing information, and may for natural reasons be represented in numerous ways depending on the needs and conditions. Also, within the context of this application, the term "detecting a change in at least one of a current, a voltage or impedance" may mean to detect any change in resulting from a change of a condition in another circuit.

When data is to be transferred, it is common to modulate the data in question. Hence, when data is modulated, the data is represented in a different form, generally being adapted for being transferred using a specific method of transfer. Generally, data is modulated according to a modulation scheme and then demodulated using the same modulation scheme, the demodulation being an inverse process as compared to the modulation, in terms of that the original data is retrieved from the modulated data. Using a simple modulation scheme, digital data may for instance be represented by switching on and off a signal for example in a transmitter. A digital "1" may for instance be represented by the signal being "switched on" or vice versa being "switched off".

Accordingly, in relation to the present invention, the data to be transferred between the first and the second circuit may be modulated according to any type of modulation scheme, simple or advanced and for example including a complex error control. However, according to a preferred embodiment of the invention, the data may be modulated according to a pulse-interval-modulation (PIM) scheme, which is advantageous in that the load condition may be altered for only a very limited period of time but still represent relevant data to be transferred. By utilizing a PIM scheme, data may be represented by the time between alternations in the load condition in the second circuit. This means in practice that different data may be represented by altering the load condition for the same amount of time using only different time intervals between the alternations in the load condition. By only altering the load condition for a short time interval as compared to the total time, power may be transferred uninterrupted for a principal period of time. In other words, power may be transferred uninterrupted for a major part of the time.

In an embodiment of the invention, altering of a load condition in the second circuit may comprise short circuiting the second circuit. Advantageously, a distinct alternation in the load condition being easily detectable in the first circuit may thus be provided in a simple manner. Depending on the situation, the short circuiting may be achieved in several different ways, for instance, a transistor may be provided to create a low resistance shunt (alternative current path). Another example may be to provide a micro switch or relay to realize a low resistance shunt. It should be noted that within the context of this application the term short circuiting may mean any measure that introduces one or several shunts or alternative current paths having a lower resistance or lower combined resistance compared to the original current path before the shunt was introduced. By providing a short circuit in the second circuit, the alternating current provided to the inductor of the second circuit may be interrupted or at least significantly reduced, resulting in a reduced alternating magnetic field from the inductor of the second circuit. The reduced alternating magnetic field may then be detected in the first circuit as a change in current.

Alternatively, the altering of a load condition in the second circuit may comprise connecting or disconnecting a capacitor in the second circuit. Advantageously, a distinct change being easily detectable in the first circuit may thus be provided in a simple manner similarly to introducing a short circuiting as described above.

According to a preferred embodiment, the method for transfer of power and data may further comprise the steps of altering a load condition in the first circuit for modulating data to be transferred from the first circuit to the second circuit, and detecting a change in at least one of a current, a voltage or an impedance in the second circuit resulting from the altered load condition in the first circuit, wherein the detected change in at least one of a current, a voltage or an impedance is demodulated for receiving the data at the second circuit, which is advantageous in that data may also be transferred from the first circuit to the second circuit.

Accordingly, data may be transferred in both directions between the inductively coupled circuits, as an alternation in one circuit may be picked up in another adjacently arranged circuit. In order to establish a two way data transfer between inductively coupled circuits, the circuits concerned may be employed with means for altering a load condition as well as means for detecting a current change. Accordingly, the first circuit may thereby be able to transmit both power and data.

Consequently, in order to transfer data from the first circuit to the second circuit, a load condition in the first circuit may be altered by short circuiting the first circuit as described above in conjunction with the second circuit. Analogously a load condition in the first circuit may be altered by connecting or disconnecting a capacitor in the first circuit as described above in conjunction with the second circuit.

According to another aspect of the invention, there is provided a system for transfer of power and data, comprising a first circuit comprising a first inductor and a second circuit comprising a second inductor, wherein the circuits are inductively coupled to each other while being galvanically separated from each other, means for receiving power in the form of an alternating current to be transferred between the first circuit and the second circuit, wherein the alternating current is applied to the inductor of the first circuit such that a current is built up in the inductor of the second circuit, means for altering a load condition in the second circuit for modulating data to be transferred from the second circuit to the first circuit, and means for detecting a change in at least one of a current, a voltage or an impedance in the first circuit resulting from the altered load condition in the second circuit, wherein the detected change in at least one of a current, a voltage or an impedance is demodulated for receiving the data at the first circuit. In general, features of this aspect of the invention provide similar advantages as discussed above in relation to the previous aspect of the invention.

According to one embodiment of the invention, the first circuit and the second circuit may be resonant circuits having operation frequencies being tuned with respect to each other. By utilizing resonant circuits and tuning their respective operating frequencies to match each other, the effective impedance between the circuits may be decreased, leading to an increased transfer of power as well as an increased robustness of the coupling.

According to an embodiment of the invention, one of the first circuit or the second circuit may be arranged in galvanic connection with at least one of a light and/or presence sensor. Advantageously, by connecting one or several sensors to one of the circuits, data pertaining to a light condition or to the presence of, for example, a person in a room or other space may easily and reliably be fed to the connected circuit. By being able to feed sensor data into a circuit, sensor data may then be transferred from the circuit into which it is being fed to another circuit being galvanically coupled to the circuit.

According to another embodiment of the invention, one of the first circuit or the second circuit may be arranged in galvanic connection with a light controller, which is advantageous in that data may be fed to or from the light controller. By feeding data from one or several sensors such as light and/or presence sensors to the light controller, the current state of the light controller may be adjusted to suit the current need for illumination. For instance, there is often no need for illuminating a room or a space when no person is resident in the room or space. Consequently, by being able to control the illumination upon detecting that nobody is present in a room, the light controller may switch off or dim the light in order to save energy and lifetime of the illumination source used.

Similarly, illumination in a room or space may be adjusted depending on a current light condition. Accordingly, data may be fed from a light sensor to the light controller. For instance the illumination in a room may be dimmed if the sensor detects a high level of natural light resulting in that no or little light from, for example, a light source needs to be added in order to reach a desired level of illumination.

Several sensors of different types may be used together in the same system in order to be able to feed relevant data to one of the circuits or to several circuits. In the same way, several light controllers may be connected to the same circuit or to different circuits in order to be able to control, for example, several light sources based on the same sensor data.

Preferably, the first inductor and the second inductor may be arranged on an inside or an outside of a lighting tube or a lighting bulb, respectively, which is advantageous in that the inductors easily may be arranged on either side of the tube of a lighting tube. By arranging the inductors on the inside and the outside of a lighting tube, a robust inductive coupling may be achieved between the inductors, through the material of the lighting tube, without for example having to adjust the inductors or the lighting tube, as those may be prepared to fit on one another with, for example, a tight fit.

The establishment of a robust inductive coupling through the material of the lighting tube or bulb is generally no problem as lighting tubes and bulbs normally are made of thin glass. As the glass tends to be thin, the inductors may come close together, although being present on different sides of the glass, increasing the inductive coupling.

As an example, windings of the first inductor and the second inductor may be rectangular and have two opposite sides whose lengths are arranged on the inside or the outside of the lighting tube and may be adapted to correspond to an inner circumference or an outer circumference of the lighting tube respectively, which is advantageous in that the inductive coupling may be maintained virtually unaffected by the rotational orientation of the inductors, i.e. a coupling factor may be kept virtually constant.

By employing rectangular inductors the magnetic coupling between the inductors may in principle only be based on the coupling between sides of the inductors following a tangential direction of the lighting tube, as the sides of the inductor following a longitudinal direction of the lighting tube may be brought close together, thereby leading to a local cancelation of the magnetic field.

In a preferred embodiment, windings of the first inductor and the second inductor may be rectangular and having two opposite sides, where their lengths when arranged on the inside or the outside of the lighting tube may be adapted to correspond to a predetermined portion of an inner circumference or a predetermined portion of an outer circumference of the lighting tube respectively, which is advantageous in that the size of the inductors may be adapted to suit the available space in and/or on the lighting tube in question.

Alternatively, the first inductor and the second inductor may be cylindrical having circumferences essentially corresponding to an inner circumference or an outer circumference of a lighting tube or a lighting bulb and being adapted to be arranged on an inside or an outside of the lighting tube or the lighting bulb respectively. This is advantageous in that an inductive coupling between the inductors may be made insensitive to rotational movement in a simple but yet effective way. As the inductors present a rotational symmetry, the inductive coupling between the inductors are left unaffected even if the inductors are rotated with respect to one another. Also, using this arrangement the inductors may come in close proximity to each other when arranged on an inside or an outside of, for example, a lighting tube or a lighting bulb, thereby providing a robust inductive coupling, as described above.

The system as discussed above may preferably be incorporated in a lighting arrangement, further comprising a light source arranged in a lighting tube or lighting bulb and a sensor configured to be connected to the outside of the lighting tube or lighting bulb. According to this embodiment, the system is accordingly arranged for allowing transfer of power and data between the lighting tube or lighting bulb, and the at least one of a light and a presence sensor. This embodiment will be further discussed below in relation to the detailed description of the invention.

Evidently the arrangement may also be used in other applications, within or outside the scope of lighting installations. For instance, it may be advantageous to use as the two inductors, a transformer, including a ferromagnetic core. The transformer may then exchange both power and data without the need for a separate galvanically isolated data interface. This setup may for instance be used in stand-alone dimmable lighting drivers.

Furthermore, the preferred configuration with an inductor arranged on the inside of a tube and another inductor on the outside of a tube may be relevant to for instance vacuum cleaners in order to enable a sensing functionality in, for example, a tube or in dust brushes. Furthermore, respiration machines and medial oxygen pumps, catheters or fuel filling tubes may also be employed with galvanically separated circuits and inductors in order to be able to transfer power and data.

Further features of, and advantages with, the present invention will become apparent when studying the appended claims and the following description. The skilled person will realize that different features of the present invention may be combined to create embodiments other than those described in the following, without departing from the scope of the present invention.

### BRIEF DESCRIPTION OF THE DRAWINGS

The aspects of the invention, including its particular features and advantages, will be readily understood from the following detailed description and the accompanying drawings, in which:
Fig. 1 conceptually illustrates a system according to an embodiment of the invention;
Fig. 2 illustrates a lighting arrangement according to a currently preferred embodiment of the invention;
Fig. 3a and 3b conceptually illustrates winding profiles for the first and the second inductors used in relation to the lighting arrangement of Fig. 2; and
Fig. 4 is a flow chart of the method according to the invention.

### DETAILED DESCRIPTION

The present invention will now be described more fully hereinafter with reference to the accompanying drawings, in which preferred embodiments of the invention are shown. This invention may, however, be embodied in many different forms and should not be construed as limited to the embodiments set forth herein; rather, these embodiments are provided for thoroughness and completeness, and fully convey the scope of the invention to the skilled person. Like reference characters refer to like elements throughout.

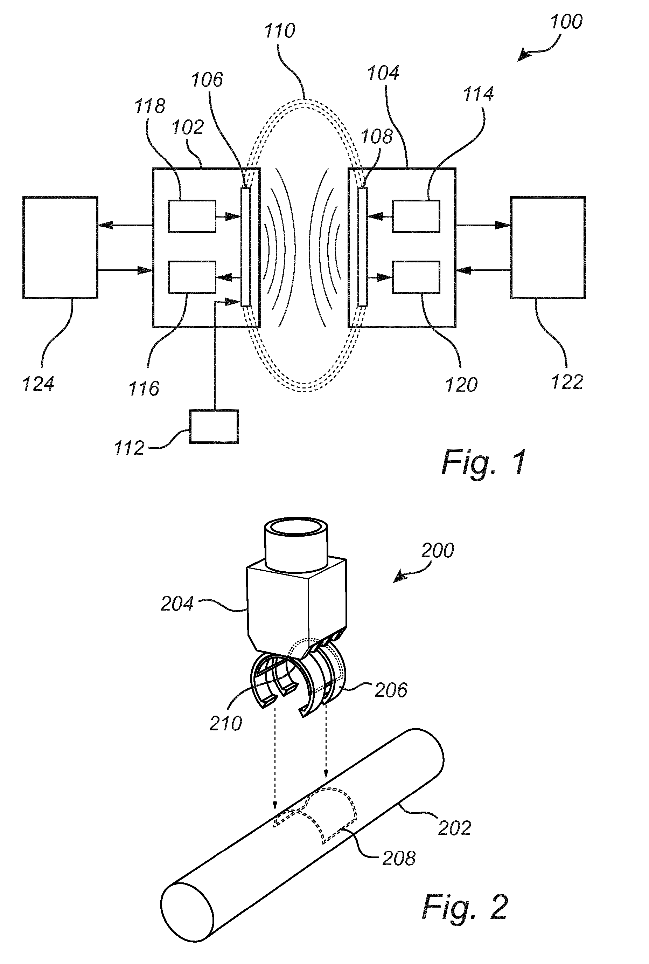

Referring now to the drawings and to Fig. 1 in particular, there is conceptually depicted a system 100 according to an embodiment of the invention. The system 100 comprises a first circuit 102 and a second circuit 104 inductively coupled 110 to each other while being galvanically separated from each other. Each of the first circuit 102 and the second circuit 104 comprises a first inductor 106 and a second inductor 108, respectively. The inductors 106, 108 are part of the first 102 and second 104 circuits, respectively. The first circuit 102 is connected to means 112 for receiving power in the form of an alternating current. The alternating current received at the means 112 is then fed to the first inductor 106 of the first circuit 102, leading to that an alternating magnetic field is generated by the first inductor 106. The second inductor 108, being adjacently arranged to the first inductor 106, is then affected by the alternating magnetic field generated by the first inductor 108. In other words, the first 106 and second 108 inductors are inductively coupled by the alternating magnetic field. The alternating magnetic field, which affects the second inductor 108, results in that a current is built up in the second inductor 108, in case the second inductor 108 is connected to some form of circuitry. In case of an open circuit only a voltage will be built up in the second inductor 108. The current being built up by the alternating magnetic field in the second inductor 108 is then used to power the second circuit 104 which is connected to the second inductor 108.

The characteristics of the first 102 and second 104 circuits are preferably tuned in order to establish an efficient connection between the circuits 102, 104. In practice, the first circuit 102 and the second circuit 104 typically are resonant circuits having tuned operating frequencies. By tuning the operation frequencies, which in practice means tuning the components of the respective circuits, the circuits 102, 104 may be made to show a resonant behavior for a specific frequency. When the circuits 102, 104 then are operated at or close to the resonant frequency of the circuits 102, 104 the energy transfer 110 between the circuits becomes more efficient, compared to a coupling which is based on non-resonant circuits or resonant circuits not being operated at or close to the resonance frequency. The choice of operating frequencies will be discussed in more detail below.

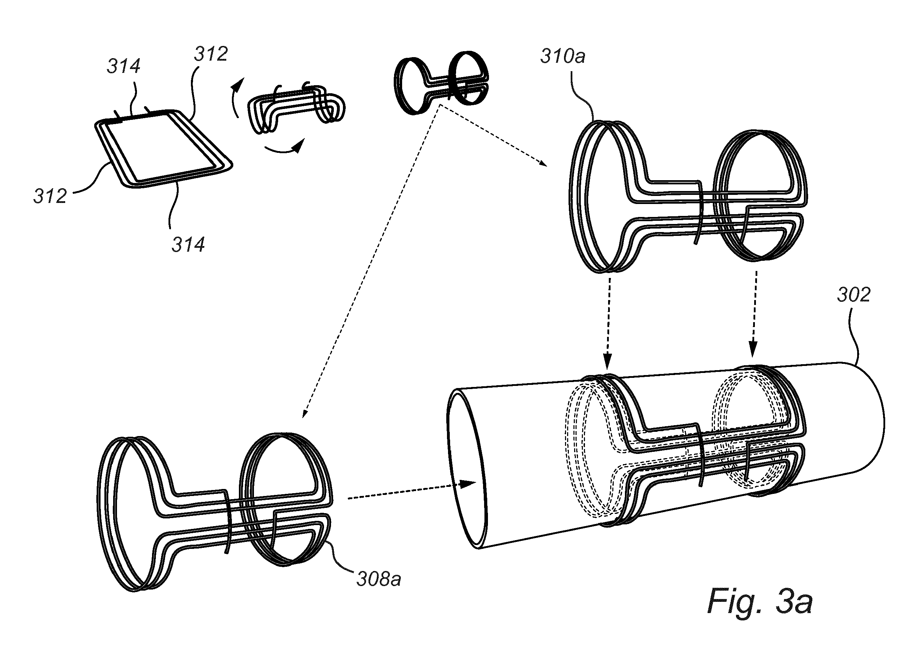

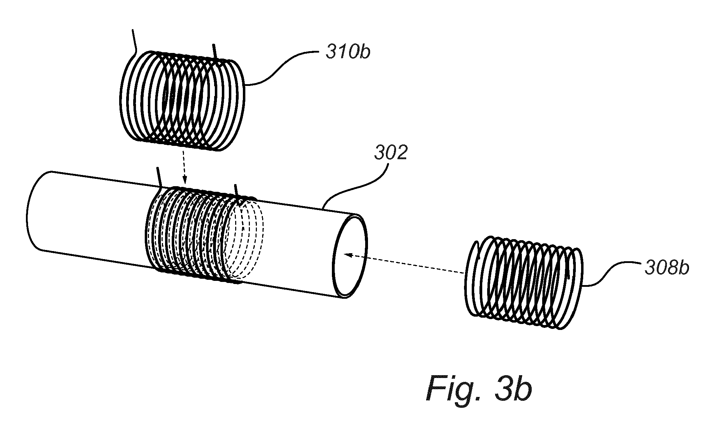

To further explain the inductive coupling 110 between the first 102 and second 104 circuits, a comparison to a transformer may be made, where the circuitry of the first circuit 102, including the first inductor 106, represents the primary side to which power is fed from, for example, the mains supply. The circuitry of the second circuit 104, including the second inductor 108, in the same way may represent the secondary side of a transformer. As will be discussed more in detail, in conjunction with Figs. 3a and 3b, the inductors are generally formed as, for example, coils having characteristics suitable for the current setup in question. However, it should be understood that not only coils may be used to achieve an inductive coupling 110 between the first 102 and second 104 circuits.

The second circuit 104 is employed with means 114 for altering a load condition in the second circuit 104. By altering a load condition in the second circuit 104, the inductive coupling 110 between the circuits 102, 104 are affected leading to an alternation in the alternating magnetic field. For example, by introducing a low resistance shunt in parallel with the inductor 108 of the second circuit 104, the second circuit 104 may be short circuited. The short circuiting, which is an alternation in load of the second circuit 102, results in that less energy is transferred from the first circuit 102 to the second circuit 104, a state which in turn may be sensed in the first circuit 102. Consequently, data may be transferred by altering a load condition in the second circuit 104. By short circuiting or nearly short circuiting the second circuit 104 in a predetermined way, data may be sent from the second circuit 104 to the first circuit 104. As the power transfer between the circuits 102, 104 may be interrupted or at least disturbed when the load condition is altered, the second circuit 104 is short circuited according to a pulse interval modulation scheme (PIM scheme). By utilizing a PIM scheme, where the time interval between the load alternations represents the data to be transferred, the power transfer may be disturbed to a very limited extent, as will be described below.

It should again be noted that the second circuit 104 may be short circuited using several different techniques, for instance a transistor, a relay or a micro switch may be used. Another example of altering a load condition is to connect or disconnect a capacitor.

In order to receive the data being transmitted by the second circuit 104, the first circuit 102 is employed with means 116 for detecting a current change in the first circuit 102. The current change in the first circuit 102 is as described above a result of the altered load condition in the second circuit 104 resulting in a change in the alternating magnetic field, which in turn leads to the current change. The current change may be detected in various ways, without departing from the scope of the invention. The most common way is to employ the first circuit 102 with components 116 being able to detect, for example, the current change in the first 102 circuit.

Similarly data may be transferred from the first circuit 102 to the second circuit 104 by employing also the first circuit 102 with means 118 for altering a load condition. By altering a load condition in the first circuit 102, for example by short circuiting the first circuit 102, the alternating magnetic field is affected. The short circuiting of the first circuit 102 by introduction of a low resistance shunt, as discussed above, results in that a major part of the current in the first circuit 102 will flow through the shunt, resulting in a reduced current in the first inductor 106. The reduced current in the first inductor 106 results in a reduced alternating magnetic field, which may be detected in the second circuit 104 as a change in current. In order to detect a changed current in the second circuit 104, the second circuit 104 may be employed with means 120 for detecting the current change.

When the above system 100 is used in conjunction with a lighting arrangement, the system 100 may be used to power the second circuit 104 and a sensor 122 connected to the second circuit. Of course, several sensors 122 may be used and thus be connected to the second circuit 104. The sensor 122 used in a lighting arrangement typically includes a light and/or a presence sensor for detecting a level of natural light and/or a presence of a person in a room to be illuminated. The sensor 122 is powered by the second circuit 104 which in turn is powered by the first circuit 102 over the inductive coupling 110. The sensor 122 sensing light or presence transfers the sensor data to the second circuit 104, which in turn transfers the data to the first circuit 102 by altering a load condition in the second circuit 104, as discussed above.

The sensor data transmitted from the sensor 122 to the first circuit 102 is then typically transmitted to a light controller 124, which is utilized to control a light source. The light source is controlled based on the data acquired by the sensor 122. In practice, the light source may be dimmed and turned on or off by the light controller based on the sensor data.

Similarly, the light controller 124 may transmit data to the sensor. In such an implementation, for example a present state of the light controller 124 may be transmitted to the sensor 122, thereby confirming that the sensor data has been received by the light controller 124.

Commonly, analog sensors 122 may be used in lighting arrangements, the sensors typically outputting a voltage in the range of 1-10 volts corresponding to for example the current light condition as sensed by the sensor 122. In order to transfer the analog data from the sensor 122 over the inductive coupling 110, the data may be modulated according to a PIM scheme as discussed above. For instance, 1 volt may be represented by shot circuiting the second circuit 104 every 1 millisecond and 10 volt may be represented by short circuiting the second circuit 104 every 10 milliseconds. Based on the above discussion, it should be understood that other pulse intervals or representations of the analog sensor data may be used while still obtaining the same or similar results. The fact that the short circuiting only takes place for a limited period of time at given time intervals results in a reduced disturbance in the power transfer between the circuits 102, 104.

Sensors 122, that output digital sensor data, may also be used with the system 100 in order to reduce the disturbance of any ongoing power transfer between the circuits 102, 104. The sensor data is modulated by a coding operation in which digital bits is converted into a data sequence, used for the short circuiting, which contains longer periods of non-short circuiting, compared to periods of short circuiting. A simple example of a coding where two bits are modulated into a data sequence is as follows: 00 = SOOO, 01 = OSOO, 10 = OOSO, 11 = OOOS, where O represents an open (not short circuited) circuit and S represents a short circuited circuit. As is seen form the above schematic example, the circuit is open for a longer period of time irrespective of the data being transferred, which results in a reduced disturbance in any ongoing power transfer between the circuits 102, 104. It should be understood that several other representations of digital data may be used without departing from the scope of the invention.

When power is to be transferred between the circuits 102, 104, the circuits may be operated at various frequencies as discussed above. Several operating frequencies may be used to achieve the desired result of efficient power transfer, which enables a simultaneous data transfer between the circuits 102, 104. As there may be legislation regulating the use of frequencies, a number of operating frequencies, which fulfill the most common legislations, are preferred. A first preferred operating frequency is below 100 or 150 kHz which at the same time suits oscillator frequencies of commonly used LED drivers. Another preferred frequency range is the 2.6 - 2.7 MHz band as frequency emissions from lighting devices is typically tolerated in this band. Another preferred operating frequency is the 123 MHz band used for RFID tags.

Now referring to Fig. 2, a lighting arrangement 200 comprising a LED lighting tube 202 and a sensor unit 204 is depicted. The sensor unit 204 is clipped onto the lighting tube 202 using a flexible claw 206, which is adapted to snap onto the outer surface of the lighting tube 202. The lighting tube 202 is employed with a coil 208. The coil 208 of the lighting tube 202 is inductively coupled to a coil 210 in the sensor unit 204 when the sensor unit 204 is clipped onto the lighting tube 202. When the sensor unit 204 is clipped onto the lighting tube 202 at the location where the coil 208 of the lighting tube 202 is present, the coil 210 of the sensor unit 204 comes in (close) proximity to the coil 208 of the lighting tube 202. Typically, only the glass of the lighting tube 202 separates the two coils 208, 210. By arranging the sensor unit 204 in a position on the lighting tube 202 where an inductive coupling 110 is acquired, the sensor unit 204 may be powered over the established inductive coupling 110 between the coils 208, 210.

The lighting tube 202 is typically connected to the mains and may consequently be used to transfer power to the sensor unit 204. As described above, data from the sensor 122 of the sensor unit 204 is then transferred over the inductive coupling 110 to the circuitry of the lighting tube 202, from where it may be further transferred to a light controller 124 and may be used for controlling the current state of a light source 202.

Fig. 3a is detail view of a coil arrangement according to one embodiment of the invention. The inner surface of the lighting tube 202, 302 is employed with a rectangular coil 208, 308a covering in principle the complete periphery of the lighting tube 202, 302. The coil 208, 308a is bonded to a flexible substrate (not shown) which in turn is fastened to the inside of the lighting tube 202, 302. In the same way, a coil 210, 310a is brought in close proximity to the outside of the lighting tube 202, 302. The outer coil 210, 310a is arranged on the sensor unit 204 (not shown). In order to arrange the outer coil 210, 310a to the sensor unit 204, the coil 210, 310 is bonded to a flexible substrate (not shown) just like the inner coil 208, 308.

The length of the longer sides 312 of the coils 208, 308a, 210, 310a are formed to (in principle) correspond to the inner circumference and the outer circumference of the lighting tube 202, 302 respectively. In practice, the sides 312 of the coils 208, 308a, 210, 310a are selected to be slightly shorter than the respective circumferences, thus taking into account the thickness of the glass of the lighting tube. By using this particular length, of the coils 208, 308a, 210, 310a, the short sides 314 of an individual coil 208, 308a, 210, 310a are brought close together when the coil 208, 308a, 210, 310a is mounted on the inside of the lighting tube 202, 302 or on the sensor unit 204, 304 and consequently adapted to the outside of the lighting tube 202, 302. By bringing the short sides 314 of the coils 208, 308a, 210, 310a close together, a local cancellation of the magnetic field is achieved. This results in that a major part of the inductive coupling 110 between the coils is achieved by the long sides 312 following the circumference of the lighting tube 202, 302.

By achieving the major part of the inductive coupling 110 by the longer sides 312 of the coils 208, 308a, 210, 310a following the circumferences of the lighting tube 202, 302, an inductive coupling 110 relatively insensitive to rotational orientation is achieved. This is achieved as the sensor unit 204 is clipped on to the lighting tube 202, 302 by the claw 206, allowing only rotational movement between the sensor unit 204 and the lighting tube 202, 302, meaning that the coils 208, 308a, 210, 310a will remain aligned during rotation. The maintained alignment results in a maintained inductive coupling 110.

In some lighting tubes 202, 302 a portion of the periphery is not used for light emissions, meaning that a portion of the periphery is free to hide, for example, electronics and drivers. It is thus possible to use this free space for arranging coils 208, 308a, 210, 310a similarly to above. The coils 208, 308a, 210, 310a are then adapted to cover only a portion of the circumference, but to still provide for an inductive coupling 110 as described above.

Fig. 3b is a detailed view of another coil arrangement according to one embodiment of the invention. This second coil arrangement has two circular coils 308b, 310b, being adapted to have a circumference corresponding to the outer circumference and the inner circumference of the lighting tube 202, 302 respectively. By having circular coils 308b, 310b with a rotational symmetry, the sensor unit 204 (not shown) may be rotated with respect to the lighting tube 202, 302 without affecting the inductive coupling 110 between the coils 308b, 310b. To facilitate mounting of the coils 308b, 310b, they are wound on thin substrates (not shown) enabling physical proximity.

In another embodiment, the coils 208, 308a, 308b, 210, 310a, 310b are separated from the sensor unit 204 and the lighting tube 202, 302 but still galvanically connected to the respective units. By having the coils 208, 308a, 308b, 210, 310a, 310b separated, the coils 208, 308a, 308b, 210, 310a, 310b may be placed in various locations with respect to the lighting tube 202, 302 and the sensor unit 204. This means in practice that the coils 208, 308a, 308b, 210, 310a, 310b may be placed outside the lighting arrangement 200 in a suitable location where there is no or little risk that the coil alignment is disturbed or altered.

The sensor unit 204 may also be galvanically connected to one of the coils 210, 310a, 310b by means of a guide rail. By using a guide rail, which maintains the galvanic connection between the sensor and the coil, the sensor unit 204 may be moved with respect to the coil 210, 310a, 310b.

It should be noted that the above coil arrangements may be used with other types of light sources than lighting tubes 202, 302. For example, the same technique may be used on light bulbs, where one coil then is arranged on the inside of the light bulb and the other coil is arranged on the outside of the light bulb. Further, it is of course possible to use the above coil arrangements on any type of light source or in fact any type of system or apparatus where coils may be brought in close proximity to achieve an inductive coupling 110. For instance the coils may be used in respiration machines or vacuum cleaners to only give a few examples.

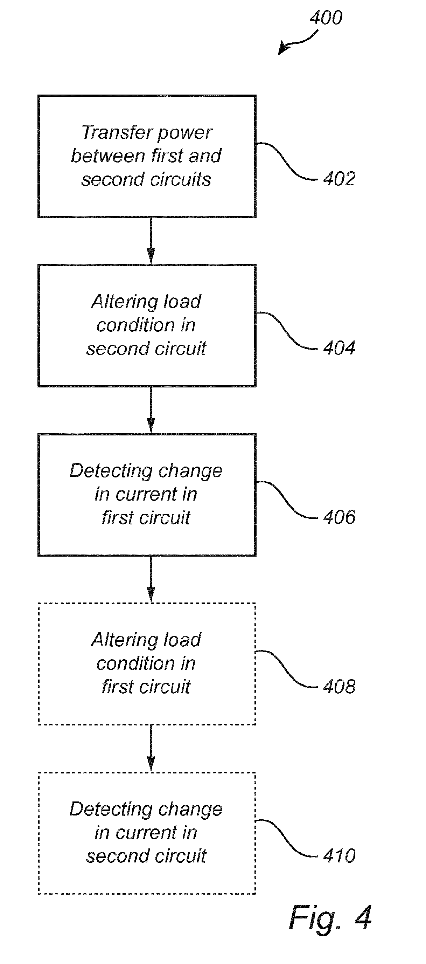

In the following a method 400 for operation of the system of Fig. 1 will described schematically with reference to Fig. 4, showing exemplifying steps for transfer of power and data.

In a first step 402, transfer of power between the first circuit 102 and the second circuit 104 is achieved by applying an alternating current to the inductor 106 of the first circuit 102. When the alternating current is applied to the first circuit 102, a current is built up in the inductor 108 of the second circuit 104, as discussed above.

In a second step 404, a load condition is altered in the second circuit 104. The load condition may be achieved by, for example, short circuiting the second circuit 104 as described above. As discussed above, other measures may be used to alter the load condition, including for example connecting or disconnecting a capacitor. The load condition is altered in such a way that it represents data to be transferred from the second circuit 104 to the first circuit 102. In other words, a load condition in the second circuit 104 is changed to modulate data to be transferred to the first circuit 102.

In a third step 406, a change in the current in the first circuit 102 is detected. By detecting the change in current resulting from the altered load condition in the second circuit 104, the data transferred from the second circuit 104 may be demodulated and received at the first circuit 102. As discussed above, several modulations and representations of data may be used within the scope of the invention. Optionally, it is also possible to transfer data from the first circuit 102 to the second circuit 104. This is achieved by performing the following additional steps. In a first additional step 408, a load condition is altered in the first circuit 102 as described for the second circuit 104 above. Data to be transferred is then modulated. In a second additional step 410, a change in current in the second circuit 104 is detected. The change in current is resulting from the altered load condition in the first circuit 102. The detected current change is then demodulated for receiving the data at the second circuit 104.

Although the figures may show a specific order of method steps, the order of the steps may differ from what is depicted. Also two or more steps may be performed concurrently or with partial concurrence. Such variation will depend on the software and hardware systems chosen and on designer choice. All such variations are within the scope of the disclosure. Additionally, even though the invention has been described with reference to specific exemplifying embodiments thereof, many different alterations, modifications and the like will become apparent for those skilled in the art. Variations to the disclosed embodiments may be understood and effected by the skilled addressee in practicing the claimed invention, from a study of the drawings, the disclosure, and the appended claims. Furthermore, in the claims, the word "comprising" does not exclude other elements or steps, and the indefinite article "a" or "an" does not exclude a plurality.

## Claims

1. Method (400) for transfer of power and data, in an arrangement comprising a first circuit (102) comprising a first inductor (106) and a second circuit (104) comprising a second inductor (108), wherein the circuits (102, 104) are inductively coupled (110) to each other while being galvanically separated from each other, the method (400) comprising the steps of:
transferring (402) power between the first circuit (102) and the second circuit (104) by applying an alternating current to the inductor (106) of the first circuit (102) such that a current is built up in the inductor (108) of the second circuit (104),
altering (404) a load condition in the second circuit (104) for modulating data to be transferred from the second circuit (104) to the first circuit (102), and
detecting (406) a change in at least one of a current, a voltage or an impedance in the first circuit (102) resulting from the altered load condition in the second circuit (104), wherein the detected change in at least one of a current, a voltage or an impedance is demodulated for receiving the data at the first circuit (102).

2. Method (400) according to claim 1, wherein the data is modulated according to a pulse-interval-modulation (PIM) scheme.

3. Method (400) according to any one of claims 1 and 2, wherein the step of altering (404) a load condition in the second circuit (104) is achieved by at least one of short circuiting the second circuit (104) and connecting or disconnecting a capacitor in the second circuit (104).

4. Method (400) according to any one of the preceding claims, further comprising the steps of:
altering (408) a load condition in the first circuit (102) for modulating data to be transferred from the first circuit (102) to the second circuit (104), and
detecting (410) a change in current in the second circuit (104) resulting from the altered load condition in the first circuit (102), wherein the detected current change is demodulated for receiving the data at the second circuit (104).

5. System (100) for transfer of power and data, comprising:
a first circuit (102) comprising a first inductor (106) and a second circuit (104) comprising a second inductor (108), wherein the circuits (102, 104) are inductively coupled (110) to each other while being galvanically separated from each other;
means (112) for receiving power in the form of an alternating current to be transferred between the first circuit (102) and the second circuit (104), wherein the alternating current is applied to the inductor (106) of the first circuit (102) such that a current is built up in the inductor (108) of the second circuit (104);
means (114) for altering a load condition in the second circuit (104) for modulating data to be transferred from the second circuit (104) to the first circuit (102), and
means (116) for detecting a change in at least one of a current, a voltage or an impedance in the first circuit (102) resulting from the altered load condition in the second circuit (104), wherein the detected change in at least one of a current, a voltage or an impedance is demodulated for receiving the data at the first circuit (102).

6. System (100) according to claim 5, wherein the first circuit (102) and the second circuit (104) are resonant circuits having operation frequencies being tuned with respect to each other.

7. System (100) according to any one of claims 5 or 6, wherein the data is modulated according to a pulse-interval-modulation (PIM) scheme.

8. System (100) according to any one of claims 5 to 7, wherein the means (114) for altering a load condition in the second circuit (104) comprises at least one of means for short circuiting the second circuit (104) and means for connecting or disconnecting a capacitor in the second circuit (104).

9. System (100) according to any one of claims 5 to 8, further comprising:
means (118) for altering a load condition in the first circuit (102) for modulating data to be transferred from the first circuit (102) to the second circuit (104), and
means (120) for detecting a change in current in the second circuit (104) resulting from the altered load condition in the first circuit (102), wherein the detected current change is demodulated for receiving the data at the second circuit (104).

10. System (100) according to any one of claims 5 to 9, wherein one of the first circuit (102) or the second circuit (104) is arranged in galvanic connection with at least one of a light and a presence sensor (122).

11. System (100) according to any one of claims 5 to 10, wherein one of the first circuit (102) and the second circuit (104) is arranged in galvanic connection with a light controller (124).

12. System (100) according to any one of claims 5 to 11, wherein the first inductor (106) and the second inductor (108) are arranged on an inside or an outside of a lighting tube (202, 302) or a lighting bulb, respectively.

13. System (100) according to claim 12, wherein windings of the first inductor (106) and the second inductor (108) are rectangular and have two opposite sides (312) whose lengths, when arranged on the inside and the outside of the lighting tube (202, 302), are adapted to correspond to an inner circumference or an outer circumference of the lighting tube (202, 302), respectively.

14. System (100) according to any one of claims 5 to 12, wherein the first inductor (106) and the second inductor (108) are cylindrical having circumferences essentially corresponding to an inner circumference or an outer circumference of a lighting tube (202, 302) or a lighting bulb and being adapted to be arranged on an inside or an outside of the lighting tube (202, 302) or the lighting bulb respectively.

15. Lighting arrangement (200), comprising:
a light source arranged in a lighting tube (202, 302) or lighting bulb;
a sensor (122, 204) configured to be connected to the outside of the lighting tube (202, 302) or lighting bulb, and
a system (100) according to any one of claims 5 to 14, the system (100) arranged for allowing transfer of power and data between the lighting tube (202, 302) or lighting bulb and the at least one of a light and a presence sensor (122, 204).
